# EUROPÄISCHE PATENTSCHRIFT

(11) **EP 1 978 889 B1**
(45) Veröffentlichungstag und Bekanntmachung des Hinweises auf die Patenterteilung: **09.09.2009**
(21) Anmeldenummer: 07718490.1
(22) Anmeldetag: 08.06.2007
(51) Int. Cl.: A61C 13/00, B23Q 35/20, B44B 3/00, B43L 13/10, B44B 3/04

(54) **KOPIER- UND BEARBEITUNGSVORRICHTUNG**
COPY AND MACHINING DEVICE
DISPOSITIF DE COPIAGE ET D'USINAGE

(30) Priorität: 13.06.2006 DE 102006027396
(43) Veröffentlichungstag der Anmeldung: 15.10.2008
(73) Patentinhaber: Amann Girrbach AG, 6842 Koblach (AT)
(72) Erfinder: AMANN, Jürgen, A-6842 Koblach (AT)
(74) Vertreter: Hofmann, Ralf U.
(86) Internationale Anmeldenummer: PCT/AT2007/000279
(87) Internationale Veröffentlichungsnummer: WO 2007/143766

(56) Entgegenhaltungen:
- US-A- 1 734 573
- US-A- 1 943 205
- US-A- 3 100 344
- US-A- 4 141 145

## Beschreibung

Die Erfindung betrifft eine Kopier- oder Bearbeitungsvorrichtung unter Einsatz eines Pantographensystems, wobei eine Tastereinheit einem abzutastenden Modell oder einer Zeichnung und eine Fräseinheit oder eine Zeicheneinheit dem zu bearbeitenden Werkstück bzw. der herzustellenden Zeichnung zugeordnet sind.

Pantographensysteme oder auch Parallelogrammarme sind für verschiedene Kopier- und Bearbeitungsvorrichtungen bekannt. Die Systeme sind relativ aufwendig und insbesondere platzintensiv, weil nämlich ein entsprechend großer Radius erforderlich ist, um den ein Pantographenarm gedreht wird.

Eine bekannte Konstruktion eines Pantographen (US-4,141,145A) sieht vor, dass eine drehbare Befestigung für einen der Pantographenarme an einem Zapfen erfolgt, der in einen am einen Ende ausgebildeten Längsschlitz dieses Pantographenarmes eingreift. Es ist auf diese Weise eine Änderung des Radiusses, um den sich der gesamte Pantograph bewegt, veränderbar. Trotzdem ist die Drehachse dieses einen Pantographenarmes relativ weit außerhalb des als Parallelogrammgestänge ausgebildeten Abschnittes des Pantographen, so dass der daraus resultierende Platzbedarf relativ groß ist.

Die vorliegende Erfindung hat sich zur Aufgabe gestellt, bei einer Kopier- oder Bearbeitungsvorrichtung der eingangs genannten Art eine konstruktive Lösung zu schaffen, durch welche der Platzbedarf für ein Pantographensystem wesentlich verringert werden kann.

Dies gelingt erfindungsgemäß dadurch, dass die den Pantographen bildenden Arme und Hebel einem Schlitten zugeordnet sind, der mit einer dem Bewegungsradius eines bei Pantographensystemen sonst üblichen Pantographenarmes entsprechenden Führungsschiene oder -bahn in Wirkverbindung steht.

Es wird also nicht mehr der lange Pantographenarm benötigt, der an einem Ende um eine in der Regel annähernd vertikale Achse verdrehbar ist und an dessen anderem Ende der von Armen und Hebeln gebildete Pantograph befestigt ist, sondern es wird eine Möglichkeit geschaffen, den Pantographen entlang eines dem Bewegungsradius eines Pantographenarmes entsprechenden Kreisbogens zu verschieben. Die Bauweise einer auf die erfindungsgemäße Art und Weise ausgerüsteten Kopier- oder Bearbeitungsvorrichtung wird zumindest auf die halben Abmessungen gegenüber der sonst üblichen Abmessungen verringert. Insbesondere bei z.B. in Labors eingesetzten Kopier- oder Bearbeitungsvorrichtungen ist diese Platzeinsparung eine enorme Verbesserung.

Gemäß der Erfindung ist ferner vorgesehen, dass der aus Armen und Hebeln bestehende Pantograph zur Einstellung des Bewegungsradius gegenüber der Führungsschiene oder - bahn verstellbar, jedoch feststellbar ausgeführt ist. Da ja ein Schlitten vorhanden ist, der in einer entsprechenden Kreisbogenbewegung verschiebbar ist, kann durch einfache Verstellung eine Änderung des Bewegungsradius erzielt werden. Es kann also auch bei Einsatz einer Führungsschiene oder -bahn eine Verstellung des Bewegungsradius vorgenommen werden.

Eine konstruktive Gestaltung liegt darin, dass eine Führungsschiene entlang von wenigstens drei versetzt zueinander angeordneten Rollen oder entlang von durch zwei oder mehr Rollenpaare gebildeten Führungselementen verschiebbar geführt ist. Es wird dadurch eine optimale Kreisbogenform geschaffen, gemäß der die Verschiebung möglich ist.

In diesem Zusammenhang ist es vorteilhaft, wenn der Schlitten mit einer an Rollen oder Rollenpaaren gehaltenen Führungsschiene fest verbunden ist. Es wird dann die gleiche Wirkung erzielt, als ob der Schlitten und somit der Pantograph an einem Pantographennarm mit entsprechend weit weg liegendem Drehpunkt befestigt wäre.

Andererseits ist es aber auch möglich, dass der Schlitten mit Rollenpaaren versehen ist, welche entlang einer feststehenden Führungsschiene oder -bahn verfahrbar sind. Auf diese Weise wird die gleiche Wirkung, jedoch mit umgekehrten Mitteln erreicht.

Eine weitere Ausgestaltungsmöglichkeit sieht vor, dass der Schlitten mit Führungsstiften versehen ist, mittels welchen der Schlitten entlang einer oder mehrerer die Führungsschiene oder -bahn bildenden Führungsnut(en) verschiebbar sind. Es ist auf diese Weise eine andere Variante der Führung und der Führungsmittel geschaffen.

Damit eine Änderung des Bewegungsradius in einem doch entsprechend kleinen oder größeren Rahmen ermöglicht wird, wird vorgeschlagen, dass der den Pantographen tragende Schlitten quer zur Längserstreckung der Führungsschiene verstellbar gehalten ist.

Weitere erfindungsgemäße Merkmale und besondere Vorteile werden in der nachstehenden Beschreibung anhand der Zeichnungen noch näher erläutert. Es zeigen:
- Fig. 1: ein Kopierfräsgerät in Schrägsicht;
- Fig. 2: das Kopierfräsgerät in Draufsicht, wobei der Pantograph in Einsatzstellung ver- schoben ist;
- Fig. 3: das Kopierfräsgerät in Draufsicht, wobei der Pantograph in eine Ruhestellung zu- rückgeschoben ist;
- Fig. 4: ein Kopierfräsgerät, bei welchem der Pantograph in der bisher üblichen Weise an einem Pantographenarm befestigt ist.

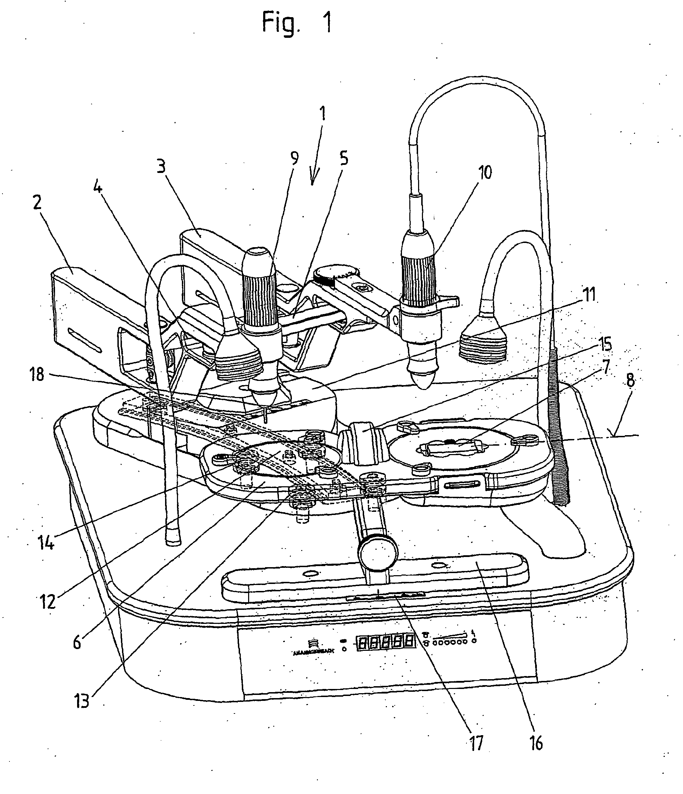

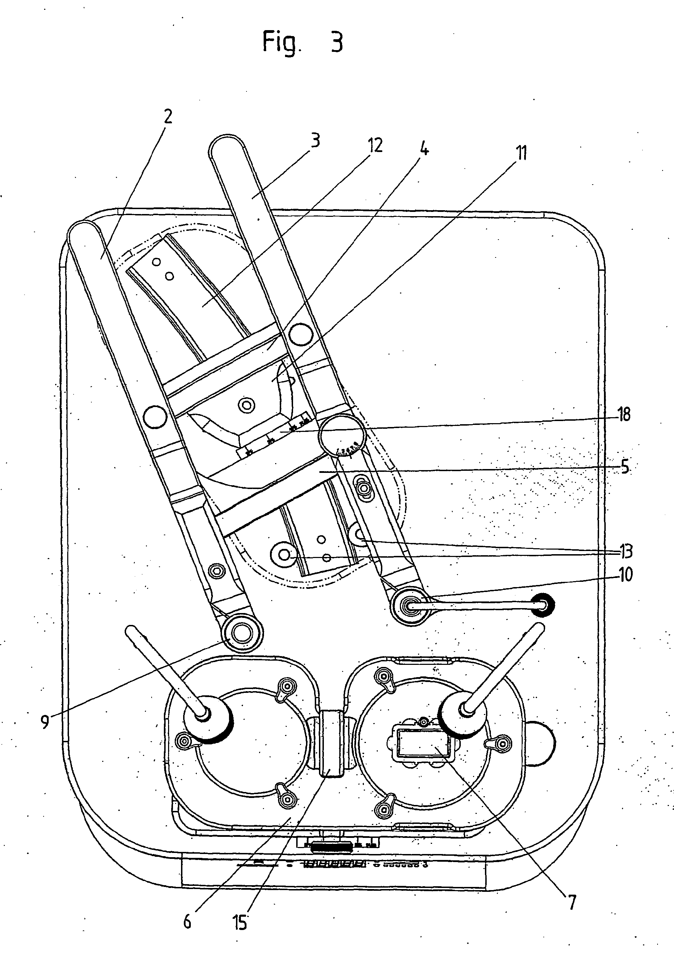

Ein in den Fig. 1 bis 3 dargestellter Pantograph 1 besteht in dieser Form aus zwei Armen 2, 3 und zwei Hebeln 4,5, welche so verbunden sind, dass das so gebildete, veränderliche Viereck ein Parallelogramm darstellt. Bei den bekannten Pantographen befindet sind in der Gelenkverbindung zweier Arme und Hebel ein Zeichenstift. Schließlich ist im Bereich der anderen Gelenkverbindung ein Fahrstift vorgesehen. Unter den Zeichenstift wird ein leeres Blatt Papier gelegt und unter den Fahrstift die Vorlage. Zum Zeichnen bewegt man den Fahrstift entlang der Konturen der Vorlage. Da der Zeichenstift der Bewegung des Fahrstiftes genau folgt, entsteht gleichzeitig auf dem Zeichenblatt eine beispielsweise im Verhältnis von 2:1 verkleinerte Kopie der Vorlage. Soll eine Verkleinerung in einem anderen Verhältnis entstehen, so bleibt die Position des Fahrstiftes unverändert; für Befestigungs- und Zeichenstift sind dem gewünschten Maßstab entsprechende Löcher zu wählen. Dabei müssen alle Stifte stets auf einer Geraden liegen. Mit der Vertauschung von Zeichen- und Fahrstift wechselt man vom Verkleinern zum Vergrößern. Eine gleich große Kopie wird erzeugt, wenn Fahr- und Zeichenstift an den Enden der beiden äußeren Schenkel und der Befestigungsstift im Gelenk der beiden kurzen Stäbe befestigt werden. Die Kopie entsteht dabei im Vergleich zur Vorlage um 180° gedreht. Ein Kopierfaktor von 1:1 ist systembedingt nur mit speziell darauf abgestimmten Schenkelkonstruktionen möglich. Früher wurden die Pantographen in der Kartografie und Geodäsie zur Verkleinerung und Vergrößerung von Karten und Plänen benutzt. Heute, in der Zeit von CAD und digitaler Bildbearbeitung; spielt der Pantograph keine große Rolle mehr, jedoch beim Kopierfräsen spielen Pantographen eine große Rolle. Sie ermöglichen durch stufenlose Verstellmöglichkeit der Position der Gelenkwinkel bzw. der Stiftaufnehmer jeden beliebigen Verkleinerungs- bzw. Vergrößerungsmaßstab. Die Führung mittels Pantographen bewirkt Bewegungen in alle drei Raumachsen. Es lässt sich also neben der Bearbeitungsposition auch die Bearbeitungstiefe bzw. das Abheben des Fräsers vom Werkzeug mitbestimmen. Die Führung geschieht meist manuell durch den Bediener.

In der nachstehenden Beschreibung wird die in den Zeichnungen gezeigte Kopierfräsmaschine als Beispiel genommen, wobei alle erfindungsgemäßen Maßnahmen auch für irgendwelche andere Kopier- und Bearbeitungsvorrichtungen herangezogen werden kann einschließlich aller damit verbundener Zeichenarbeiten.

Bei der vorliegenden Erfindung sind nun die den Pantographen bildenden Arme 2,3 und Hebel 4,5 zur Veränderung des Verkleinerungs- oder Vergrößerungsfaktors zumindest teilweise in ihrer Länge verstellbar und der Bewegungsradius des Pantographen 1 ist ebenfalls einstellbar. Weiters ist eine Arbeitsplatte 6 zur Aufnahme eines Modells und eines zu bearbeitenden Werkstückes 7 um bis zu 360° um eine horizontale Achse 8 verdrehbar gehalten.

Gemäß der vorliegenden Erfindung ist nun beim Einsatz eines Pantographensystems, welches eine Tastereinheit 9 für ein abzutastendes Modell und eine Fräseinheit 10 für ein zu bearbeitendes Werkstück 7 aufweist vorgesehen, dass die den Pantographen 1 bildenden Arme 2,3 und Hebel 4,5 einem Schlitten 11 zugeordnet sind, der mit einer dem Bewegungsradius eines bei Pantographensystemen sonst üblichen Pantographenarmes entsprechenden Führungsschiene 12 in Wirkverbindung steht. Anstelle einer Führungsschiene könnte auch eine spezielle Konstruktion einer Führungsbahn vorgesehen werden.

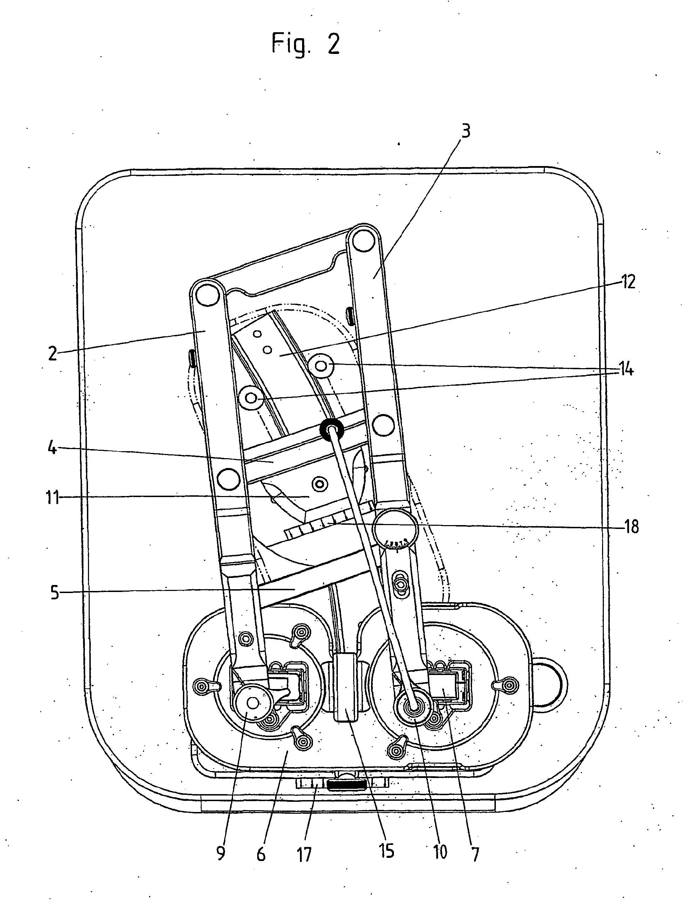

Der aus Armen 2,3 und Hebeln 4,5 bestehende Pantograph 1 ist zur Einstellung des Bewegungsradius gegenüber der Führungsschiene 12 oder einer Führungsbahn verstellbar, jedoch feststellbar ausgeführt ist. Der in Fig.2 parallel zum Hebel 4 am freien, rückwärtigen Ende der Arme 2, 3 angeordnete Hebel kann auch alternativ die Funktion des Hebels 4 übernehmen oder aber zusätzlich vorhanden sein und damit einen Teil des Pantographen 1 bilden.

Wie aus den Fig. 1 bis 3 ersichtlich, ist bei diesem Ausführungsbeispiel eine Führungsschiene 12 entlang von zwei Rollenpaaren 13, 14 gebildeten Führungselementen verschiebbar geführt. Es ist im Rahmen der Erfindung aber auch möglich, die Führungselemente von wenigstens drei versetzt zueinander angeordneten Rollen zu bilden, wobei dann an einer Längsbegrenzung der Führungsschiene 12 zwei Rollen und an der anderen Längsbegrenzung eine Rolle vorgesehen sind. Es ist aber auch denkbar, mehr als zwei Rollenpaare 13,14 vorzusehen.

Eine konstruktive Möglichkeit sieht dabei vor, dass der Schlitten 11 mit der an Rollen oder Rollenpaaren 13,14 gehaltenen Führungsschiene 12 fest verbunden ist.

Eine andere Möglichkeit der guten Führung sieht vor, dass der Schlitten 11 mit Rollenpaaren versehen ist, welche entlang einer feststehenden Führungsschiene oder -bahn verfahrbar sind. Es ist dies dann also die gegenüber der Darstellung in den Zeichnungen umgekehrte Variante.

Ferner ist eine Ausgestaltung denkbar, bei der der Schlitten 11 mit Führungsstiften versehen ist, mittels welcher der Schlitten 11 entlang einer oder mehrerer die Führungsschiene oder -bahn bildenden Führungsnut(en) verschiebbar sind.

Durch die Möglichkeit der Verschiebung des Pantographen 1 gegenüber dem Schlitten 11, welche ja einer Verstellung gegenüber dem bisher üblichen Pantographenarm entspricht, wird die Konzentrizität gewährleistet. Dies ist von besonderer Bedeutung bei der Drehung der Arbeitsplatte 6 um die horizontale Achse 11. Ist der Pantograph 1 nicht an der richtigen Position, kommt es zum Versatz, im schlimmsten Fall zur Lochbildung im Werkstück 7. Die Verschiebung der Arbeitsplatte 6 kann dabei gegenüber einem Lagerbock 15 oder aber zusammen mit einem die Arbeitsplatte 6 tragenden Stützfuß 16 erfolgen, wobei hier zur exakten Verschiebung ein Maßstab 17 eingesetzt ist.

Bereits kleinste Fehler beim Justieren des Kopierfräsgerätes haben schwerste Auswirkungen, wie Frakturen an den Modellwänden, keine Passung und Deformationen der Werkstücke 7. Bei Drehung um die horizontale Achse 8 und Vorhandensein eines Fehlers kommt es zur Verdoppelung des Fehlers. Um die Positionierung der einzelnen Geräteteile zu vereinfachen und dem Anwendungstechniker eine Sicherheit bei der Einstellung der Geräteparameter zu gewährleisten, ohne Testfräsungen vornehmen zu müssen, ist der Einsatz einer Positionierungshilfe vorteilhaft.

Bei der erfindungsgemäßen Konstruktion ist also der aus Armen 2,3 und Hebeln 4,5 bestehende Pantograph 1 zur Einstellung des Bewegungsradius gegenüber dem Schlitten 11 verstellbar ausgeführt, wobei dieser an der in einem vorbestimmten Radius verlaufenden Führungsschiene 12 befestigt ist. Die Führungsschiene 12 ist dabei entlang der von den Rollenpaaren 13,14 gebildeten Führungselemente verschiebbar geführt.

Für die Durchführung von Einstellungen ist der Schlitten 11 quer zur Längserstreckung der Führungsschiene 12 verstellbar gehalten. Es ist dabei ein entsprechender Maßstab 18 vorhanden, um das zu verstellende Maß exakt einhalten zu können.

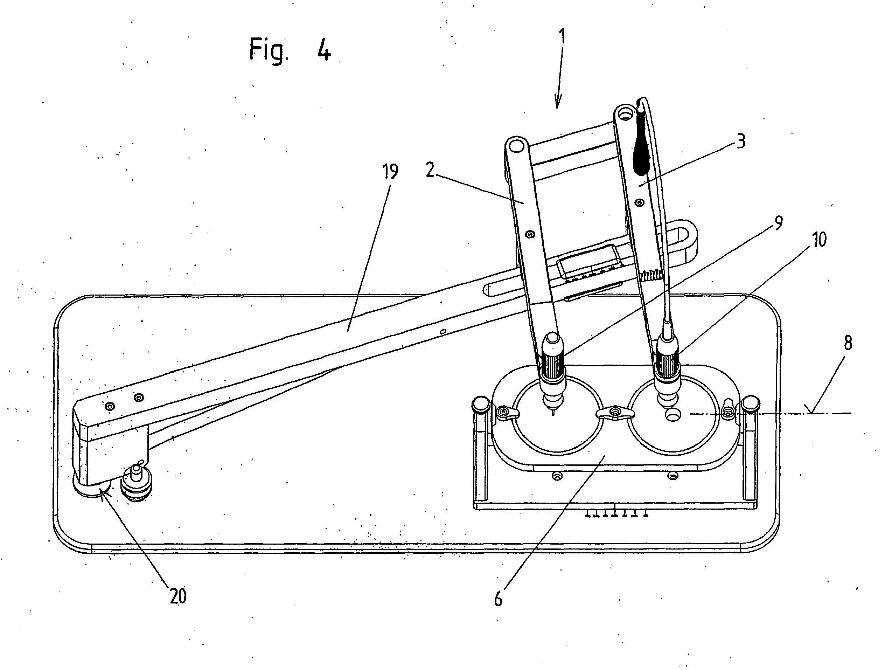

Durch die Anordnung des Pantographen 1 auf einem Schlitten 11 und durch die Anordnung einer Führungsschiene 12, welche in dem entsprechenden Radius gebogen ist und auch in diesem Radiusbereich verschiebbar gehalten ist, kann die ganze Anordnung des Kopierfräsgerätes 1 wesentlich verkleinert werden. Es ist nicht mehr die ganze Länge eines Pantographenarmes 19 und damit dessen Halterung an einem weit entfernt liegenden Drehpunkt 20 erforderlich, wie dies aus der Fig. 4 ersichtlich ist. Wenn hier die Abmessungen A und B miteinander in gleichem Maßstab verglichen würden, dann sieht am eindrücklich, um wie viel die Konstruktionsgröße bei Einsatz der erfindungsgemäßen Maßnahmen verringert werden kann.

Die Führungsschiene 12 ist in einem entsprechenden Radius gebogen, so dass in einem großen Bereich die Einstellungen veränderbar sind. Der Radius ist dabei für den besonderen Einsatz des Pantographensystems wählbar. Es also auch ein unendlich großer oder auch ein nahezu unendlicher Radius wählbar. Die Führungsschiene ist dann wohl als sozusagen gerade Schiene zu bezeichnen, entlang dann der Schlitten 11 verfahrbar ist. Mit der erfindungsgemäßen Kopier- und Bearbeitungsvorrichtung sind also Vergrößerungen und Verkleinerungen in einem relativ großen Bereich, aber auch eine 1:1 - Übertragung möglich.

### Legende

### zu den Hinweisziffern:

- 1: Pantograph
- 2: Arm
- 3: Arm
- 4: Hebel
- 5: Hebel
- 6: Arbeitsplatte
- 7: Werkstück
- 8: Achse
- 9: Tastereinheit
- 10: Fräsereinheit
- 11: Schlitten
- 12: Führungsschiene
- 13: Rollenpaar
- 14: Rollenpaar
- 15: Lagerbock
- 16: Stützfuß
- 17: Maßstab
- 18: Maßstab
- 19: Pantographenarm
- 20: Drehpunkt

## Patentansprüche

1. Kopier- oder Bearbeitungsvorrichtung unter Einsatz eines Pantographensystems, wobei eine Tastereinheit einem abzutastenden Modell oder einer Zeichnung und eine Fräseinheit oder eine Zeicheneinheit dem zu bearbeitenden Werkstück bzw. der herzustellenden Zeichnung zugeordnet sind, **dadurch gekennzeichnet, dass** die den Pantographen (1) bildenden Arme (2,3) und Hebel (4,5) einem Schlitten (11) zugeordnet sind, der mit einer dem Bewegungsradius eines bei Pantographensystemen sonst üblichen Pantographenarmes entsprechenden Führungsschiene (12) oder -bahn in Wirkverbindung steht.

2. Kopier- und Bearbeitungsvorrichtung nach Anspruch 1, **dadurch gekennzeichnet, dass** der aus Armen (2,3) und Hebeln (4,5) bestehende Pantograph (1) zur Einstellung des Bewegungsradius gegenüber der Führungsschiene (12) oder -bahn verstellbar, jedoch feststellbar ausgeführt ist.

3. Kopier- und Bearbeitungsvorrichtung nach den Ansprüchen 1 und 2, **dadurch gekennzeichnet, dass** eine Führungsschiene (12) entlang von wenigstens drei versetzt zueinander angeordneten Rollen oder entlang von durch zwei oder mehr Rollenpaare (13,14) gebildeten Führungselementen verschiebbar geführt ist.

4. Kopier- und Bearbeitungsvorrichtung nach den Ansprüchen 1 bis 3; **dadurch gekennzeichnet, dass** der Schlitten (11) mit einer an Rollen oder Rollenpaaren (13,14) gehaltenen Führungsschiene (12) fest verbunden ist.

5. Kopier- und Bearbeitungsvorrichtung nach den Ansprüchen 1 bis 3, **dadurch gekennzeichnet, dass** der Schlitten (11) mit Rollenpaaren versehen ist, welche entlang einer feststehenden Führungsschiene oder -bahn verfahrbar sind.

6. Kopier- und Bearbeitungsvorrichtung nach den Ansprüchen 1 und 2, **dadurch gekennzeichnet, dass** der Schlitten (11) mit Führungsstiften versehen ist, mittels welchen der Schlitten entlang einer oder mehrerer die Führungsschiene oder -bahn bildenden Führungsnut(en) verschiebbar sind.

7. Kopier- und Bearbeitungsvorrichtung nach Anspruch 2, **dadurch gekennzeichnet, dass** der den Pantographen (1) tragende Schlitten (11) quer zur Längserstreckung der Führungsschiene (12) verstellbar gehalten ist.

## Claims

1. A copying or machining device using a pantograph system, wherein a tracer unit is associated with a pattern to be traced or with a drawing and a milling unit or a drawing unit is associated with the work piece to be machined or the drawing to be produced, **characterised in that** the arms (2, 3) and levers (4, 5) forming the pantograph (1) are associated with a carriage (11) which is in an operative connection with a guide rail (12) or guideway corresponding to the radius of motion of a pantograph arm usually conventional with pantograph systems.

2. A copying and machining device according to claim 1, **characterised in that** to adjust the radius of motion, the pantograph (1) consisting of arms (2, 3) and levers (4, 5) is movable with respect to the guide rail (12) or guideway, however is securable.

3. A copying and machining device according to claims 1 and 2, **characterised in that** a guide rail (12) is displaceably guided along at least three rollers staggered in relation to one another or along guide elements formed by two or more roller pairs (13, 14).

4. A copying and machining device according to claims 1 to 3, **characterised in that** the carriage (11) is securely connected to a guide rail (12) held on rollers or roller pairs (13, 14).

5. A copying and machining device according to claims 1 to 3, **characterised in that** the carriage (11) is provided with roller pairs travelling along a fixed guide rail or guideway.

6. A copying and machining device according to claims 1 and 2, **characterised in that** the carriage (11) is provided with guide pins by means of which the carriage is displaceable along one or a plurality of guide groove(s) forming the guide rail or guideway.

7. A copying and machining device according to claim 2, **characterised in that** the carriage (11) bearing the pantograph (1) is held so as to be movable transversely to the longitudinal extension of the guide rail (12).

## Revendications

1. Dispositif de copiage et d'usinage utilisant un système de pantographe,
une unité de palpage étant associée à un modèle à palper ou à un dessin et une unité à fraise ou une unité de dessin étant associée à la pièce à usiner ou au dessin à réaliser,
**caractérisé en ce que**
les bras (2, 3) et leviers (4, 5) formant le pantographe (1) sont associés à
un chariot (11) coopérant avec un chemin ou un rail de guidage (12), correspondant au rayon de déplacement d'un bras de pantographe par ailleurs usuel dans les systèmes de pantographe.

2. Dispositif de copiage et d'usinage selon la revendication 1,
**caractérisé en ce que**
le pantographe (1) formé de bras (2, 3) et de leviers (4, 5) est réglable par rapport au chemin ou au rail de guidage (12) pour régler le rayon de déplacement, tout en pouvant être bloqué.

3. Dispositif de copiage et d'usinage selon les revendications 1 et 2,
**caractérisé en ce qu'**
un rail de guidage (12) peut être guidé le long d'au moins trois galets décalés l'un par rapport à l'autre ou le long d'éléments de guidage formés par deux ou plusieurs paires de galets (13, 14).

4. Dispositif de copiage et d'usinage selon les revendications 1 à 3,
**caractérisé en ce que**
le chariot (11) est relié solidairement à un rail de guidage (12) tenu à des galets ou des paires de galets (13, 14).

5. Dispositif de copiage et d'usinage selon les revendications 1 à 3,
**caractérisé en ce que**
le chariot (11) est muni de paires de galets qui peuvent être déplacés le long d'un chemin ou d'un rail de guidage fixes.

6. Dispositif de copiage et d'usinage selon les revendications 1 ou 2,
**caractérisé en ce que**
le chariot (11) est muni de broches de guidage par lesquelles il peut coulisser le long d'une ou plusieurs rainures de guidage constituant le chemin ou le rail de guidage.

7. Dispositif de copiage et d'usinage selon la revendication 2,
**caractérisé en ce que**
le chariot (11) portant le pantographe (1) est tenu de manière réglable transversalement à l'extension longitudinale du rail de guidage (12).
